# EUROPÄISCHE PATENTANMELDUNG

(11) **EP 1 619 628 A1**
(43) Veröffentlichungstag der Anmeldung: **25.01.2006**
(21) Anmeldenummer: 04017216.5
(22) Anmeldetag: 21.07.2004
(51) Int. Cl.: G06T 15/60

(54) **Verfahren zur Darstellung eines Schattens eines zugeordneten virtuellen Objekts**

(71) Anmelder: SIEMENS AKTIENGESELLSCHAFT, 80333 München (DE)
(72) Erfinder: Jamwal, Ankit, 81373 München (DE); St John, Ben, 81735 München (DE)

(57) **Zusammenfassung**

Die Erfindung betrifft ein Verfahren zur Darstellung eines Schattens eines zugeordneten virtuellen Objekts auf einer Referenzfläche, die durch ein Kamerabild vorgegeben ist. Dabei wird für vorgegebene n Abstände zwischen dem virtuellen Objekt und der Referenzfläche ein dem jeweiligen Abstand zugeordnetes Schattenbild des virtuellen Objekts auf der Referenzfläche berechnet. Weiter wird ein aktueller Objektabstand zwischen dem virtuellen Objekt und der Referenzfläche bestimmt und mit den n Abständen verglichen. Basierend auf diesem Vergleich wird ein Schattenbild eines zugeordneten Abstands ausgewählt und für das virtuelle Objekt auf der Referenzfläche des Kamerabilds dargestellt.

## Beschreibung

Die Erfindung betrifft ein Verfahren zur Darstellung eines Schattens eines zugeordneten virtuellen Objekts auf einer Referenzfläche, die durch ein Kamerabild vorgegeben ist, sowie ein Funkkommunikationsendgerät.

Unter dem Begriff "Augmented Reality" sind Kameraanwendungen bekannt, bei denen beispielsweise künstliche Objekte oder zusätzliche Textinformationen in einem Kamerabild einer realen Umgebung angezeigt werden. Derartige "Augmented Reality"-Aplikationen werden beispielsweise bevorzugt in mobilen Funkkommunikationsendgeräten, die über eine Videokamera verfügen, im Rahmen einer Spielanwendung verwendet.

Zur Simulation eines wirklichkeitsgetreuen Verhaltens eines künstlichen virtuellen Objekts in einer real gefilmten Umgebung ist es notwendig, ein dem virtuellen Objekt zugeordnetes Schattenbild wirklichkeitsgetreu darzustellen. Derzeit sind "Augmented Reality"-Anwendungen bei Funkkommunikationsendgeräten realisiert, bei denen das Schattenbild lediglich in der Lage im aktuellen Kamerabild verändert wird.

Aus reinen Computeranwendungen ist es bekannt, Schattenbilder von künstlichen Objekten einer bestimmten Belichtungssituation entsprechend in der Größe zu verändern, wozu jedoch intensive Berechnungen mit hohem Aufwand an Zeit, Speicherkapazität und an graphischer Auflösung durchzuführen sind.

Es ist daher Aufgabe der vorliegenden Erfindung, ein Verfahren und eine Funkkommunikationsendgerät zur Darstellung eines Schattens eines zugeordneten virtuellen Objekts auf einer Referenzfläche, die durch ein Kamerabild vorgegeben ist, anzugeben, bei dem mit geringem Aufwand eine möglichst wirklichkeitsgetreue Schattensimulation ermöglicht wird.

Diese Aufgabe wird durch die Merkmale der Patentansprüche 1 und 5 gelöst. Vorteilhafte Weiterbildungen sind in den Unteransprüchen angegeben.

Dem vorliegenden erfindungsgemäßen Verfahren liegt die Erkenntnis zugrunde, dass ein Schattenbild im Allgemeinen durch eine diffuse Lichtverteilung bzw. durch eine diffuse Beleuchtung eines Objekts aus einer zumindest ungefähr bekannten Richtung gebildet wird.

Für ein Objekt mit geringem Abstand zu einer Fläche ergibt eine derartige Beleuchtung ein Schattenbild, das sehr dunkel und von seiner Umgebung scharf abgegrenzt ist. Weist hingegen das Objekt einen größeren Abstand zur Fläche auf, so ist das zugeordnete Schattenbild nur unscharf von seiner Umgebung abgegrenzt und weist außerdem einen helleren Grauton auf.

Um dieses Verhalten zu simulieren, werden beim erfindungsgemäßen Verfahren für jeweilige vorgegebene Abstände zwischen dem virtuelle Objekt und einer Referenzfläche, auf der das Schattenbild darzustellen ist, jeweils zugeordnete Schattenbilder berechnet. Bei dieser Berechnung wird insbesondere eine diffuse Beleuchtung des Objekts vorausgesetzt, die aus einer zumindest ungefähr bekannten Richtung erfolgt.

Anhand des tatsächlichen Objektabstands, den das virtuelle Objekt zur Referenzfläche aufweist, wird dann das Schattenbild auf der Referenzfläche dargestellt, dessen zugeordneter Abstand dem Objektabstand am besten entspricht, d.h. es wird ein Schattenbild dargestellt, dessen zugeordneter Abstand eine minimale Abweichung zum tatsächlichen Objektabstand aufweist.

Zur Bestimmung des tatsächlichen Objektabstands sind insbesondere für "Augmented Reality"-Verfahren mehrere Möglichkeiten bekannt. Besonders vorteilhaft werden zur weiteren Einsparung von Rechenzeit diejenigen verwendet, bei denen unter Verwendung von Markern, die in der gefilmten realen Umgebung angeordnet sind, Objektabstände ermittelt werden. Als Marker werden beispielsweise Objekte verwendet, die leicht zu erkennende Muster, Merkmale oder Texturen aufweisen. Vorteilhafterweise sind diese an vorbekannten Orten innerhalb des Kamerabildes positioniert.

Durch das erfindungsgemäße Verfahren wird eine wirklichkeitsgetreue Variation der Größe und auch der Intensität (Grauton bzw. Schwarzton) des Schattenbilds ermöglicht, wodurch eine realistische Darstellung des Schattenbilds erreicht wird.

In einer vorteilhaften Weiterbildung der Erfindung wird für einen weiteren Abstand, der zwischen zwei vorgegebenen Abständen liegt, ein zugeordnetes Schattenbild durch Interpolation der Schattenbilder erzeugt, die den beiden vorgegebenen Abständen zugeordnet sind. Durch diese Interpolation wird eine weitere Reduzierung der vorab zu bestimmenden Schattenbilder und dadurch eine Einsparung an Rechenzeit ermöglicht.

Das erfindungsgemäße Verfahren wird besonders bevorzugt in mobilen Funkkommunikationsendgeräten eingesetzt, die über eine Videokamera verfügen und die zur Durchführung einer "Augmented-Reality"-Anwendung ausgebildet sind.

Nachfolgend wird die Erfindung anhand einer Figur näher erläutert. Dabei zeigt
- FIG 1: ein virtuelles Objekt, das einen ersten Abstand zu einer durch ein Kamerabild vorgegebenen Referenzfläche aufweist,
- FIG 2: das virtuelle Objekt, das einen zweiten Abstand zur Referenzfläche aufweist, und
- FIG 3: das virtuelle Objekt mit erfindungsgemäß zugeordnetem Schattenbild.

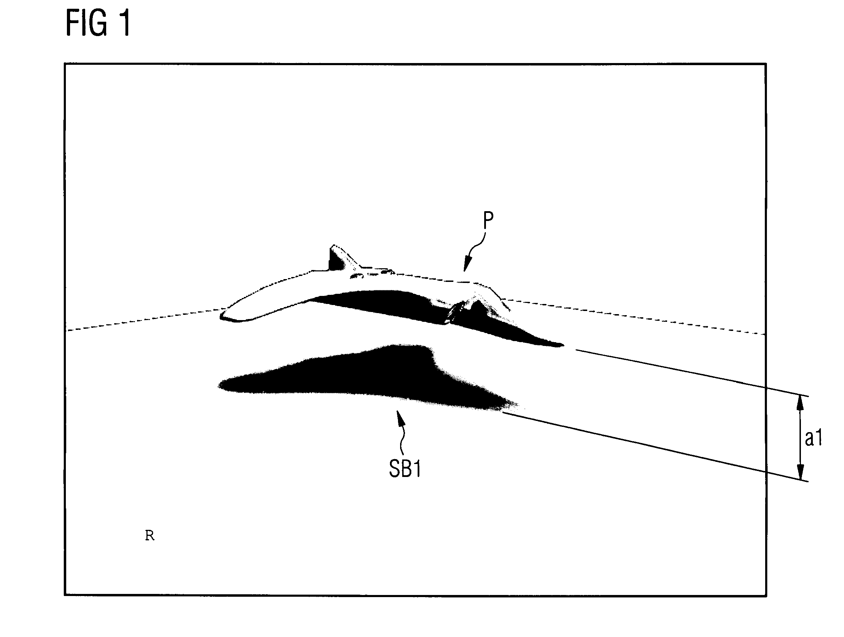

FIG 1 zeigt ein virtuelles Objekt P, das einen ersten Abstand a1 zu einer durch ein Kamerabild vorgegebenen Referenzfläche R aufweist. Erfindungsgemäß wird für diesen ersten Abstand a1 ein zugeordnetes erstes Schattenbild SB1 berechnet.

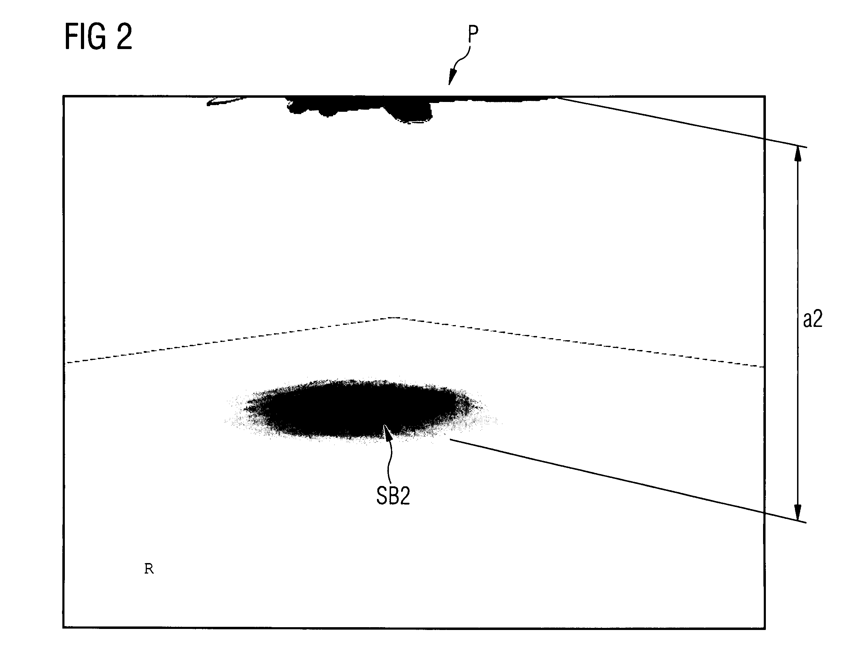

FIG 2 zeigt das virtuelle Objekt P in einer Teilansicht, wobei das virtuelle Objekt P einen zweiten Abstand a2, der verglichen zum ersten Abstand a1 sehr groß ist, zur Referenzfläche R aufweist. Erfindungsgemäß wird für diesen zweiten Abstand a2 ein zugeordnetes zweites Schattenbild SB2 berechnet.

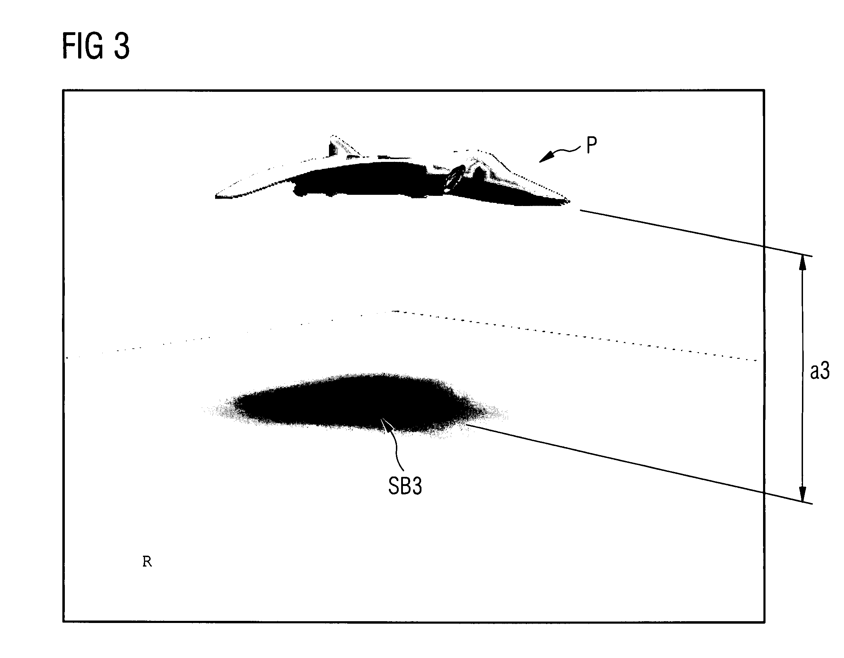

FIG 3 zeigt das virtuelle Objekt P mit erfindungsgemäß zugeordnetem Schattenbild SB3.

Erfindungsgemäß wird der tatsächliche Objektabstand a3 zwischen dem virtuellen Objekt P und der Referenzfläche R bestimmt und mit dem ersten Abstand al bzw. mit dem zweiten Abstand a2 verglichen.

Unter der Annahme, dass der Objektabstand a3 einen Wert aufweist, der ungefähr mittig zwischen den Werten des ersten Abstands a1 und des zweiten Abstands a2 liegt, wird durch Interpolation des ersten Schattenbilds SB1 und des zweiten Schattenbilds SB2 ein drittes Schattenbild SB3 gebildet, das dem Objektabstand a3 zugeordnet ist.

Dieses dritte Schattenbild SB3 wird nun auf der Referenzfläche für das virtuelle Objekt P dargestellt.

Unter der Annahme, dass der Objektabstand a3 einen Wert aufweist, der ungefähr dem Wert des ersten Abstands a1 entspricht, wird als drittes Schattenbild SB3 nun das erste Schattenbild SB1 auf der Referenzfläche dargestellt, da in diesem Fall die Abweichung zwischen dem ersten Abstand a1 und dem dritten Abstand a3 minimal ist.

Weitere Abstufungen zwischen den Schattenbildern sind durch Interpolation bzw. durch Berechnung weiterer Schattenbilder beliebig realisierbar.

## Patentansprüche

1. Verfahren zur Darstellung eines Schattens eines zugeordneten virtuellen Objekts auf einer Referenzfläche, die durch ein Kamerabild vorgegeben ist,
- bei dem für vorgegebene n Abstände zwischen dem virtuellen Objekt und der Referenzfläche ein dem jeweiligen Abstand zugeordnetes Schattenbild des virtuellen Objekts auf der Referenzfläche berechnet wird,
- bei dem ein aktueller Objektabstand zwischen dem virtuellen Objekt und der Referenzfläche bestimmt und mit den n Abständen verglichen wird,
- bei dem basierend auf diesem Vergleich ein Schattenbild eines zugeordneten Abstands ausgewählt und für das virtuelle Objekt auf der Referenzfläche des Kamerabilds dargestellt wird.

2. Verfahren nach Anspruch 1,
- bei dem für einen ersten Abstand ein erstes Schattenbild und für einen zweiten Abstand ein zweites Schattenbild berechnet wird, und
- bei dem für einen dritten Abstand, dessen Wert zwischen dem des ersten und dem des zweiten Abstands liegt, ein zugeordnetes drittes Schattenbild durch Interpolation aus dem ersten und dem zweiten Schattenbild gebildet wird.

3. Verfahren nach Anspruch 1, bei dem der aktuelle Objektabstand unter Verwendung von im Kamerabild angeordneten Markern bestimmt wird.

4. Verfahren nach einem der vorhergehenden Ansprüche, bei dem das Kamerabild einer Videokamera verwendet wird, die eine Augmented-Reality-Anwendung unterstützt.

5. Funkkommunikationsendgerät mit einer Videokamera, mit einem Prozessor und mit einer Anzeigeeinrichtung, bei dem der Prozessor, die Videokamera und die Anzeigeeinrichtung zur Durchführung des Verfahrens nach einem der Ansprüche 1 bis 4 ausgebildet sind.
